# EUROPEAN PATENT SPECIFICATION

(11) **EP 2 972 620 B1**
(45) Date of publication and mention of the grant of the patent: **11.03.2020**
(21) Application number: 14717562.4
(22) Date of filing: 11.03.2014
(51) Int. Cl.: G05B 23/02

(54) **INTEGRATED HEALTH MANAGEMENT APPROACH TO PROPULSION CONTROL SYSTEM PROTECTION LIMITING**
INTEGRIERTER INTAKTHEITSVERWALTUNGSANSATZ ZUR BEGRENZUNG DES SCHUTZES EINES ANTRIEBSSTEUERUNGSSYSTEMS
APPROCHE DE GESTION SANITAIRE INTÉGRÉE À LA LIMITATION DE PROTECTION DE SYSTÈME DE COMMANDE DE PROPULSION

(30) Priority: 15.03.2013 US 201361800947 P
(43) Date of publication of application: 20.01.2016
(73) Proprietor: Rolls-Royce North American Technologies, Inc., Indianapolis, IN 46241 (US); Rolls-Royce Corporation, Indianapolis, Indiana 46225-1103 (US)
(72) Inventor: MYER, Joseph, D., Avon, IN 46123 (US); SKERTIC, Richard, J., Carmel, IN 46033 (US); CALHOUN, Keith A., Carmel, IN 46033 (US)
(74) Representative: Ström & Gulliksson AB
(86) International application number: PCT/US2014/023430
(87) International publication number: WO 2014/150501

(56) References cited:
- EP-A2- 2 267 305
- US-A1- 2004 267 395
- US-A1- 2006 235 707

## Description

### FIELD OF TECHNOLOGY

An improved health management approach for extending the life of a system is disclosed.

The improvements are applicable to engines such as turbines used for propulsive power in marine, land, air, and underwater applications, as examples.

### BACKGROUND

It is often desirable to integrate prognostic tools into health management systems of a gas turbine system. For example, prognostic tools can be utilized to assess probability of failure of a system or one or more components thereof. Accordingly, one or more components of the system can be taken out of service before the probability of failure for such component(s) rises to unacceptable levels. However, this approach may result in discarding components that still have remaining life early. Accordingly, there is room for further improvements in this area. EP2267305 is a prior art disclosure which is directed to the extending of the remaining lifetime for a wind turbine by reducing the power production.

### BRIEF DESCRIPTION OF THE DRAWINGS

While the claims are not limited to a specific illustration, an appreciation of the various aspects is best gained through a discussion of various examples thereof. Referring now to the drawings, exemplary illustrations are shown in detail. Although the drawings represent the illustrations, the drawings are not necessarily to scale and certain features may be exaggerated to better illustrate and explain an innovative aspect of an example. Further, the exemplary illustrations described herein are not intended to be exhaustive or otherwise limiting or restricted to the precise form and configuration shown in the drawings and disclosed in the following detailed description. Exemplary illustrations are described in detail by referring to the drawings as follows:
FIG. 1 is a schematic illustration of an electrical system coupled to a gas turbine engine, according to one example;
FIG. 2 illustrates an exemplary gas turbine engine that incorporates the electrical system illustrated in FIG. 1;
FIG. 3 is a flowchart depicting a technique for increasing the life of a system according to an embodiment;
FIG. 4 is a block diagram illustration of a health management system configured to extend the life of a system according to an embodiment; and
FIG. 5 is another technique for increasing the life of a system according to an embodiment.

### DETAILED DESCRIPTION

An exemplary gas turbine engine and schematic of an electrical system coupled thereto are described herein and are shown in the attached drawings. The electrical system includes at least two generator circuits, one coupled to a high pressure portion of a gas turbine engine and the other coupled to a low pressure portion of the gas turbine engine.

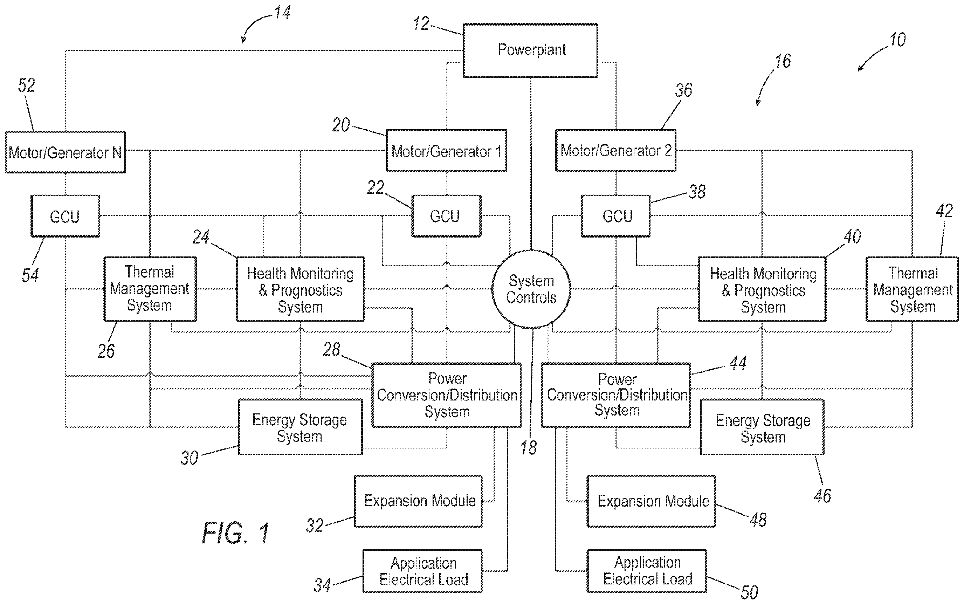

Figure 1 illustrates an electrical system 10 in which a power plant or engine 12, such as a gas turbine engine, provides electrical power to a first power circuit 14 and a second power circuit 16. A system controller 18 is coupled to engine 12 and also to first and second circuits 14, 16. First power circuit 14 includes a motor/generator 20 and a General Control Unit (GCU) 22 coupled thereto. GCU 22 is also coupled to other components within first power circuit 14, such as a health monitoring and prognostics system 24, a thermal management system 26, and a power conversion/distribution system 28. First power circuit 14 also includes an energy storage system 30, an expansion module 32, and application electrical load(s) 34. System controller 18 is configured to regulate power flow (such as electrical currents and voltages within system 10) to provide power to various electrical busses. The power may be DC, AC, or conversion therebetween. System controller 18 may also be configured to execute computer program instructions to control the operation of engine 12, including fuel flow, or the position of any variable geometry systems (e.g., from the flight control system of an aircraft or from a steering system of a ship).

Health monitoring and prognostics system 24 monitors the health of system components, and is used to estimate component life based on sensor feedback received from components within engine 12. Thermal management system 26 includes pumps, expansion valves, and the like, as well as a controller, to provide coolant for the purposes of climate control, and other system operations. Power conversion/distribution system 28 receives electrical power from motor/generator 20 via GCU 22, and converts the power to a more useable form such as a DC voltage for storage in energy storage system 30, expansion module 32, and application electrical load(s) 34. The energy storage system 30 may include a battery or other energy storage system. Energy storage system 30 stores energy for providing power when engine 12 is not running (i.e., not generating power), but also to provide power to motor/generator 20 to provide starting power to engine 12 during startup. Expansion module 32 and application electrical load 34 represent additional electrical components that receive power from power conversion/distribution system 28.

Second power circuit 16 similarly includes a motor/generator 36 and a GCU 38 coupled thereto. GCU 38 is also coupled to other components within second power circuit 16, such as a health monitoring and prognostics system 40, a thermal management system 42, and a power conversion/distribution system 44. Second power circuit 16 also includes an energy storage system 46, an expansion module 48, and application electrical load(s) 50. The components 36-50 of second power circuit 16 are similarly arranged as described with respect to first power circuit 14. Additionally, in one example electrical system 10 includes one or more additional motor/generators 52 and corresponding GCUs 54 as well, which may be coupled to a gas turbine engine as will be further described. Thus, the system 10 is modular and flexible in that it may be expanded to include a number N of motor/generators based on contemplated operating conditions.

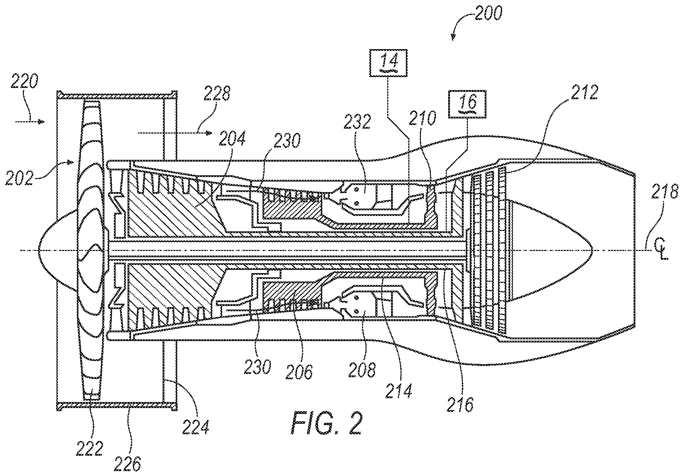

Figure 2 illustrates a gas turbine engine 200, which includes a fan 202, a low pressure compressor and a high pressure compressor, 204 and 206, a combustor 208, and a high pressure turbine and low pressure turbine, 210 and 212, respectively. The high pressure compressor 206 is connected to a first rotor shaft 214 while the low pressure compressor 204 is connected to a second rotor shaft 216. The shafts extend axially and are parallel to a longitudinal center line axis 218. Ambient air 220 enters the fan 202 and is directed across a fan rotor 222 in an annular duct 224, which in part is circumscribed by fan case 226. Bypass airflow 228 provides engine thrust while a primary gas stream 230 is directed to a combustor 232 and the high pressure turbine 210.

First and second rotor shafts 214, 216, are coupled, respectively, to first and second power circuits 14, 16, as illustrated in Figure 1. Thus, first and second power circuits 14, 16 are configured to split power between motor/generators 20, 36 so that each provides a portion of the power demand. As such, a power sharing/transfer arrangement between motor/generators 20, 36 provides the platform power demand, and includes a capability to provide power to one of the shafts 214, 216, as necessary. Such arrangement also provides an ability to optimize load shedding and a demand side management of the power requirement. Thus, life and performance considerations may be taken into account in real-time and optimized to actively seek and obtain performance optima while equipment is in operation.

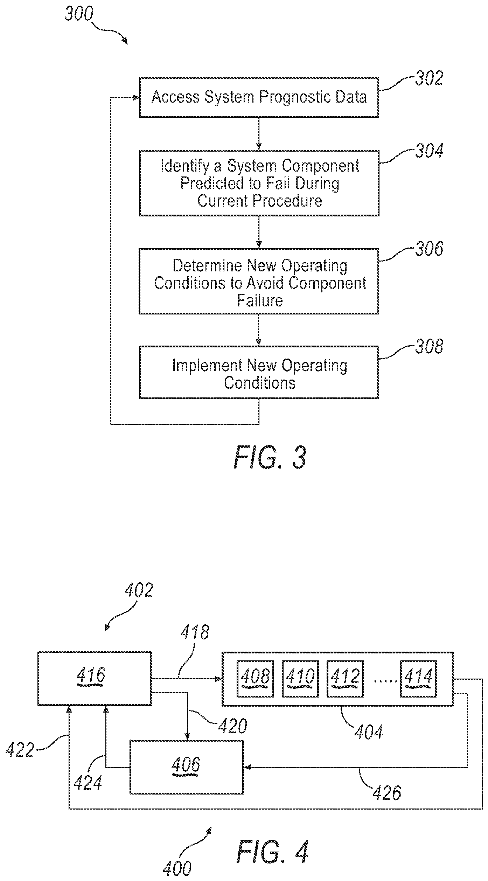

Turning now to Figure 3, a flowchart depicting a technique 300 for extending the life of a plant or system according to an embodiment is shown. The plant or system may take a variety of forms. For example, the plant or system could be a turbine engine of a plane, an oil extraction system, or a gas extraction system, among others. Technique 300 begins at block 302 where system component prognostic data is accessed. It is contemplated that prognostic data includes information pertaining to the remaining lifespan of components of the system as they operate during current system procedure.

After accessing prognostic data at block 302, process control proceeds to block 304 where, using the prognostic data, a system component predicted to fail during the current procedure is identified. For example, from the prognostic data, the predicted failure of fuel pump metering unit (FPMU) operating at current conditions may be identified. It is noted that the present procedure can take on a variety of forms. For example, the procedure may be a plane landing procedure or steady state operation of a plant. Further, it is also noted that the reasons for component failure are varied. For example, the predicted failure may be due to excessive usage or premature wear.

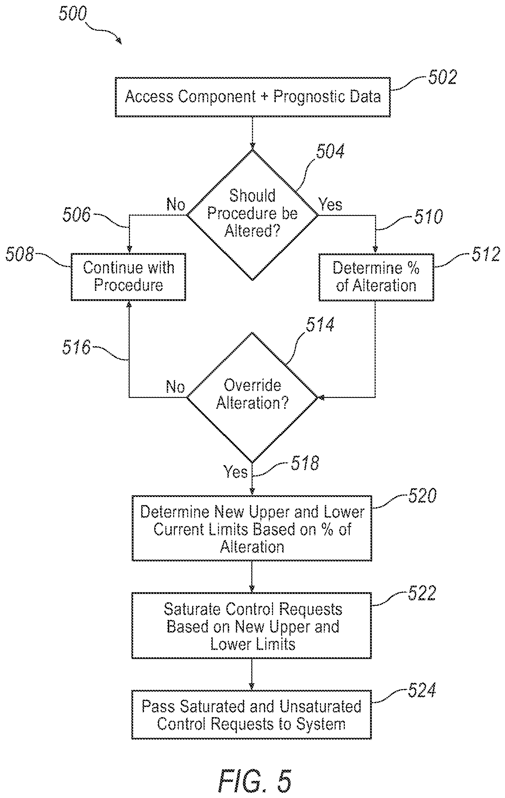

Referring back to technique 300, upon identifying 304 the predicted failure of a component, process control proceeds to block 306 to determine new operating conditions to avoid component failure. For example, if the FPMU is predicted to fail, process control may determine an alternate control method where current limit constants are modified to bring in upper and lower current limits to extend the life of the FPMU. In other words, new operating conditions are determined for the FPMU that will increase its lifespan beyond the length of the current procedure. Further details regarding the determination of a trim scheme (i.e., creations of new current limit constants) will be set forth in greater detail below with respect to Figure 5.

Still referring to Figure 3, when the new operating conditions are determined 306, process control proceeds to block 308 where the new operating conditions are implemented. For example, new current limit constants for maximum and minimum limit protection of a FPMU may be implemented. Accordingly, FPMU control commands may be saturated by the new limits to extend the life of the FPMU so the procedure can be completed. Though maximum and minimum current limits are discussed, it will be appreciated that other limits may be manipulated, such as transient limits and/or maximum and minimum hard limits, among others.

It is possible that the new upper and lower current limits may degrade the manner in which the system operates, but at the same time it allows the system to complete its current operation or procedure (e.g., landing a plane). In other words, the life of the system has been extended so that the system can complete a current operation, task, or mission.

Upon implementation 308 of the new operating conditions, process control returns to block 302 where prognostic data is again accessed and then to block 304 were the same or different component of the system is identified. Upon identifying the same or different component predicted to fail during a current system operation, technique 300 continues.

Technique 300 is accomplished in real-time and as such, component and/or system protection may be accomplished while the system is in use during a task or mission. That is, according to embodiments, the system is not taken off-station to determine current limit constants.

Referring now to Figure 4, a block diagram of an environment 400 having a management system 402 for controlling operating conditions is shown according to an embodiment. In the present embodiment, the environment 400 includes the management system 402, a turbine system 404, and a prognostic unit 406. Further, according to the present embodiment, turbine system 404 includes a plurality of components 408-414 configured to effect thrust of turbine system 404 and controllable by management system 402. Though in the present embodiment, system 404 is considered a turbine system and components 408-414 are components that effect thrust on turbine system 404, turbine system 404 could be another system such as an oil extraction rig or a gas extraction rig and accordingly components 408-414 would be components relative to such systems. Further, it is contemplated that turbine system 404 or other systems could have more components than the four components 408-414 shown that are controllable by a management system such as management system 402. Indeed, systems or plants having less than four components controllable by a management system such as management system 402 are also contemplated.

Referring to the embodiment depicted in Figure 4, management control system 402 is comprised of a single management controller 416. However, though not shown, it is contemplated that management system 402 may be comprised of more than one controller. Further, it is contemplated that prognostic unit 406 may be an integral part of management system 402 (*see* e.g., Health Monitoring and Prognostics System 24, Figure 1) rather than a distinct unit as shown. As would be understood, in such an embodiment management control system 402 of Figure 4 would also generate the prognostic data.

Referring to an embodiment shown in Figure 4, management controller 416 sends command data 418 to turbine system 404. This command data 418 causes the plurality of components 408-414 to each act in a particular manner. Management controller 416 also sends substantially similar command data 420 to prognostic unit 406.

In addition to passing command data 418, 420 to turbine system 404 and prognostic unit 406, respectively, management controller 416 also receives sensor data 422 from turbine system 404 and prognostic data 424 from prognostic unit 406. Sensor data 422 includes information indicative of a state unique to each of components 408-414. Prognostic data 424, on the other hand, comprises information indicative of remaining life approximations at current operating conditions of each of the plurality of components 408-414. In other words, prognostic data 424 includes information about the level of degradation of each component 408-414 while each 408-414 is at respective operating conditions.

Prognostic unit 406 determines the remaining life approximations by comparing sensor data 426 from turbine system 404 with control demand data 420 from management controller 416. According to an embodiment, sensor data 426 received by prognostic unit 406 is substantially similar to sensor data 422 received by management controller 416.

Prognostic unit 406 may, for example, use an algorithm or real-time model (not shown) to compare the command data 420 (i.e., data that would have the effect of making components 408-414 each act in a particular manner such as command data 418) with sensor data 426 (i.e., data indicative of how components 408-414 responded to command data 418) to determine remaining life approximations of each component 408-414 of turbine system 404.

Management controller 416 employs the prognostic data 424 and sensor data 422 to determine individual current limit constants for components 408-414. For example, management controller 416 may determine, based on prognostic data 424 and sensor data 422 associated with component 408, that if component 408 continues to operate with its present maximum hard current limit it may fail during the present operation. Accordingly, management controller 416 determines a new maximum hard limit constant for component 408 that is lower than its present maximum hard current limit constant that will allow component 408 to complete its present operation. In other words, management controller 416 decreases the maximum hard current limit of component 408 so that component 408 does not fail during its present operation. Such a decreased maximum hard current limit may cause system/plant 404 to operate in a degraded fashion. At the same time, however, decreasing the maximum hard current limit for component 408 can stop component 408 from failing during an operation that in turn could cause the entire turbine system 404 to fail. Accordingly, management controller 416 has extended the life of the turbine system 404.

It is noted that in the present example though the maximum hard current limit constant discussed is associated with maximum hard limit protection, in other examples the current limit constant can be associated with other limits. For example, it will be appreciated that the current limit constant may be associated with minimum limit protection, transient limit protection, and/or minimum hard limits. Further, according to embodiments, current limit constant determinations for other components 410, 412, 414 are also determined. These components 410-414 along with component 408 may, for example, be a fan rotor (*see* e.g., fan rotor 222, Figure 2), a pressure component associated with EPR control, a pressure component associated with TPR control, or an FPMU.

Referring now to Figure 5, a technique 500 for protecting a plant or system from fault is shown according to an embodiment. Starting at block 502, process control accesses prognostic data, where such data includes information indicative of the remaining life span or level of degradation of plant or system components operating at present conditions. That is, the prognostic data determines the length of time a component can function at current operating conditions before failing. Process control then proceeds to decision block 504 to determine whether, in light of the prognostic data, the procedure will continue without alterations. For example, it may be determined from the prognostic data that components of a plant or system are operating at a level that allows them to complete the current procedure, mission, or task without failure or fault. In such an instance, it is determined 506 that operation of components of the system should not be altered and process control proceeds to block 508 where the procedure continues with present component controls. A procedure, mission, or task may take a variety of forms. For example, a procedure could be the generation of thrust from a gas turbine engine in a plane, the operation of an oil rig, or a mission of an aerial drone or the like.

Still referring to Figure 5, if the time needed to complete the current procedure is greater than the projected lifespan of the component in question, then process control determines 510 that the procedure should be altered and process control proceeds to block 512 where the percentage of procedure alteration or degradation is determined. Upon determining the percentage of alteration or degradation, process control proceeds to decision block 514, where it is determined whether or not the alteration will be overridden. For example, a system operator such as a pilot or a plant control manager may decide 516 to override the alteration. In such a case, process control proceeds to block 508, where the current procedure continues at levels that are not altered.

Alternatively, it may be determined 518 that alteration of operating levels will proceed and accordingly new upper and lower current limits are created based on the percentage of alteration determined at block 512. In other words, new current limit constants are determined 520 for the component with the poor predicted lifespan. It is these new current limits that will alter the procedure. It is contemplated that the new upper limit is created by multiplying the old upper current limit constant by a Boolean or factor in order to reach the determined percentage of alteration. It will be appreciated that whether or not a factor or Boolean will be utilized to determine the new upper current limit constant will be depend on the type of limit being determined. Further, according to an embodiment, the new lower limit is determined by multiplying the upper limit by negative one. Other embodiments are also contemplated where a unique Boolean or factor other than negative one is used to determine the new lower limit.

Upon determining 520 the new upper and lower limits, process control proceeds to block 522 were relevant control demands are saturated. For example, it may have been determined 510 that a fan assembly rotor speed operation should be degraded so that a plane turbine engine (i.e., a plant or system) will not fail and the plane can safely land. In other words, the rotor speed operation should be degraded so that the plane can complete its task or mission. If the pilot does not override 518 the degradation, new upper and lower rotor speed limits are determined 520 and the current and future rotor speed commands that go outside the new upper and lower boundaries will be saturated 522. Accordingly, the rotor speed operation has been altered or degraded to prevent failure of the rotor and/or the plane turbine engine.

Technique 500 employs prognostic data along with a least wins logic while a system or plant is in working operation. That is, the system or plant does not need to be taken off task or off-station to determine new upper and lower limits. In other words, in the context where the system is a plane's turbine engine, the new limits can be determined and implemented on wing.

It is contemplated that technique 500 as well as technique 300 of Figure 3 be carried out by a control and/or management system having one or more controllers such as those discussed with respect to Figures 1 and 4.

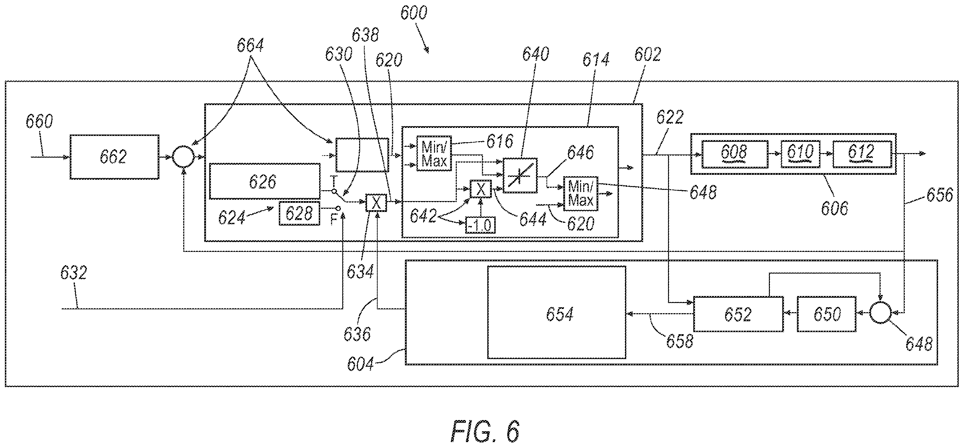

Turning now to Figure 6, a block diagram depicting a control scheme 600 implementing aspects of technique 300 of Figure 3 and technique 500 of Figure 5 are shown according to an embodiment. The control scheme 600 employs prognostic information to alter in real-time one or more current limits to extend the life of a system or plant.

Control scheme 600 of Figure 6 depicts a set of management logic 602 and a set of prognostic logic 604 such as integrated model based prognostic logic and the interaction of each 602, 604 with a system 606. System 606 includes a plurality of actuators 608, a plant 610, and a plurality of sensors 612. It will be appreciated that, though not shown, the actuators 608 and sensors 612 could be an integral part of the plant 610. That is, rather than the plant 610 being distinct from the actuators 608 and the sensors 612 as depicted in Figure 6, the actuators 608 and sensors 612 may be an integral part (not shown) of the plant 610.

Referring to the embodiment depicted in Figure 6, the management logic 602 and prognostic logic 604 are employed to extend the life of the system 606. It will be appreciated by one skilled in the art that the management logic 602 may be implemented in one or more controllers. Likewise, the prognostic logic 604 may be implemented in one or more controllers or the same controller(s) as the prognostic logic 604.

According to the present embodiment, the management logic 602 includes a set of alteration logic 614 to alter a set of active current limits 616 to produce an altered set of active current limits 618. The altered set of active current limits 618 saturate input commands 620 to produce control commands 622 that will not cause one or more actuators 608 (i.e., components) of system 606 to fail. It is noted that the control scheme 600 includes a set of override logic 624 that allows a user such as a pilot to override the alteration of the active current limits 616. The override logic 624 includes a first notification 626, a second notification 628, and a selection switch 630. The selection switch 630 is controlled by a user input 632. Further information regarding the override logic 624 will be set forth in detail below.

As depicted in the control scheme 600, the management logic 602 includes a set of alteration proposal logic 634 that receives a set of prognostic data 636 from the prognostic logic 604. The prognostic data 636 includes remaining life limit approximations about one or more components of the system 606. By utilizing the prognostic data 636, the alteration proposal logic 634 identifies a component of the system 606 that is predicted to fail during an active procedure or mission. Furthermore, the alteration proposal logic 634 determines an alteration scheme that will allow the system 606 to complete the mission. According to an embodiment, this alteration scheme is set forth as a percentage of alteration or degradation of system operation. In other words, the alteration proposal logic 634 proposes a plan that will alter or degrade the operation of the system 606 so that the system 606 or components (e.g., actuators 608) thereof do not fail during operation.

The override logic 624 presents the proposed alteration to a user (not shown) via the first notification 626. According to an embodiment, the first notification 626 notifies the user that an "X" percentage of system operation degradation is proposed. The second notification 628 effectively informs the user that the proposed degradation can be overridden so that the system 606 will operate at one hundred percent. The user input 632 determines whether the degradation will be overridden.

According to the embodiment depicted in Figure 6, the user input 632 did not override the proposed alteration. As such, the selection switch 630 of override logic 624 is set to "T" (true).

Since the proposed alteration was not overridden, the alteration proposal logic 634 passes proposed alteration data 638 to the saturation logic 640, where the proposed alteration data 638 sets forth a Boolean or value. Accordingly, the proposed alteration data 638 passed to the saturation box 640 serves as altered upper limit data. The proposed alteration data 638 is also multiplied by a factor of negative one, as shown by a set of lower limit logic 642, to set forth altered lower limit data 644 that is also passed to the saturation box 640. The saturation box 640 also receives active current limits 616. Accordingly, altered current limit constant data 646 are output from the saturation box 640 and set forth as the altered current limits 618.

The input commands 620 are then passed through these altered current limits 618 and any of the inputs that would cause a current flow above the altered maximum altered current limit or below the altered minimum current limit is saturated so as not to cause a fault in system 606, effectively extending the life of the system 606.

With reference to prognostic information such as prognostic data 636, it is noted that a variety of prognostic logic can be employed to determine such prognostic data 636. In the embodiment depicted in Figure 6, the prognostic logic 604 includes a set of prognostic summation logic 648, a tracking filter 650, a real-time engine model 652, and a set of gradient search optimization prognostics and engine management algorithms 654.

Control demands 622 are input into the real-time engine model 652 while sensor data 656 associated with the control demands 622 is input into the prognostic summation logic 648. One skilled in the art will appreciate that with the control demand and sensor data 622, 656, respectively, matched outputs 658 are determined. Matched outputs 658 are then input into the optimization prognostics and engine management algorithms 654, where the remaining life limit data (i.e., prognostic data 636) is determined. As discussed in detail above, the prognostic data 636 is employed by the management logic 602 to identify a failing component or actuator (i.e., an actuator of the plurality of actuators 608) so that current limits associated with that component or actuator 608 thereof can be altered in real-time to extend the life of the system 606. By implementing the control scheme 600 in real-time, the need to take the system 606 or plant 610 off-station for analysis is avoided.

It is noted that a thrust command 660, a power management module 662 and a set of control law logic 664 are shown to serve as an exemplary illustration of the interface between portions of an existing health management system (i.e., the power management module 660 and control law logic 662) with the management logic 602.

It will be appreciated that though the control scheme 600 depicts the alteration of both a lower (i.e., a minimum) and an upper (i.e., a maximum) limit, alternate control scheme embodiments may only alter only a lower or upper limit.

Computing devices such as system 10 of Figure 1 generally include computer-executable instructions such as the instructions of the system controller 18, where the instructions may be executable by one or more computing devices such as those listed above. Computer-executable instructions may be compiled or interpreted from computer programs created using a variety of programming languages and/or technologies, including, without limitation, and either alone or in combination, Java™, C, C++, C#, Objective C, Visual Basic, Java Script, Perl, etc. In general, a processor (e.g., a microprocessor) receives instructions, e.g., from a memory, a computer-readable medium, etc., and executes these instructions, thereby performing one or more processes, including one or more of the processes described herein. Such instructions and other data may be stored and transmitted using a variety of computer-readable media.

A computer-readable medium (also referred to as a processor-readable medium) includes any non-transitory (e.g., tangible) medium that participates in providing data (e.g., instructions) that may be read by a computer (e.g., by a processor of a computer). Such a medium may take many forms, including, but not limited to, non-volatile media and volatile media. Non-volatile media may include, for example, optical or magnetic disks and other persistent memory. Volatile media may include, for example, dynamic random access memory (DRAM), which typically constitutes a main memory. Such instructions may be transmitted by one or more transmission media, including coaxial cables, copper wire and fiber optics, including the wires that comprise a system bus coupled to a processor of a computer. Common forms of computer-readable media include, for example, a floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH-EEPROM, any other memory chip or cartridge, or any other medium from which a computer can read.

Databases, data repositories or other data stores described herein may include various kinds of mechanisms for storing, accessing, and retrieving various kinds of data, including a hierarchical database, a set of files in a file system, an application database in a proprietary format, a relational database management system (RDBMS), etc. Each such data store is generally included within a computing device employing a computer operating system such as one of those mentioned above, and are accessed via a network in any one or more of a variety of manners. A file system may be accessible from a computer operating system, and may include files stored in various formats. An RDBMS generally employs the Structured Query Language (SQL) in addition to a language for creating, storing, editing, and executing stored procedures, such as the PL/SQL language mentioned above.

In some examples, system elements may be implemented as computer-readable instructions (e.g., software) on one or more computing devices (e.g., servers, personal computers, etc.), stored on computer readable media associated therewith (e.g., disks, memories, etc.). A computer program product may comprise such instructions stored on computer readable media for carrying out the functions described herein.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

## Claims

1. A real-time engine management system (10) comprising:
a controller system (18, 402, 600) configured to control demand on a first component (20, 36, 52, 214, 216, 222, 408, 410, 412, 404, 608, 610) of an engine (12, 200, 404, 606), the controller system (18, 402, 600) is configured to:
access (302, 502) a first set of prognostic data (424, 636) about the first component (20, 36, 52, 214, 216, 222, 408, 410, 412, 404, 608, 610), wherein the first set of prognostic data (424, 636) includes a remaining lifespan approximation of the first component (20, 36, 52, 214, 216, 222, 408, 410, 412, 404, 608, 610) operating at a present operating condition;
identify (304, 504) a temporal length of an engine procedure (634) operating at the present operating condition;
alter (306, 512, 520) a maximum current limit constant (616, 618) associated with the first component (20, 36, 52, 214, 216, 222, 408, 410, 412, 404, 608, 610) to increase the remaining lifespan approximation of the first component (20, 36, 52, 214, 216, 222, 408, 410, 412, 404, 608, 610) beyond the temporal length;
implement (308, 524) the maximum current limit constant (616, 618) associated with the first component (20, 36, 52, 214, 216, 222, 408, 410, 412, 404, 608, 610) so that the first component (20, 36, 52, 214, 216, 222, 408, 410, 412, 404, 608, 610) does not fault during engine operation; **characterized in that** the controller system (18, 402, 600) is further configured to alter (520) a minimum current limit constant (616, 618) associated with the first component (20, 36, 52, 214, 216, 222, 408, 410, 412, 404, 608, 610) to increase the remaining lifespan approximation of the first component (20, 36, 52, 214, 216, 222, 408, 410, 412, 404, 608, 610) beyond the temporal length.

2. The real-time engine management system (10) according to claim 1, wherein the engine (12, 200, 404, 606) is configured to provide propulsive power in a transportation vehicle.

3. The real-time engine management system (10) according to claims 1 or 2, the controller system (18, 402, 600) further configured to generate (406, 604) the first set of prognostic data.

4. The real-time engine management system (10) according to any one of claims 1 to 3, the controller system (18, 402, 600) is further configured to offer (514) an operator an opportunity to override (624) the implementation of the maximum current limit constant (616, 618) associated with the first component (20, 36, 52, 214, 216, 222, 408, 410, 412, 404, 608, 610).

5. The real-time engine management system (10) according to any one of the preceding claims, wherein the first component (20, 36, 52, 214, 216, 222, 408, 410, 412, 404, 608, 610) is a fuel pump metering unit.

6. The real-time engine management system (10) according to any one of the preceding claims, the controller system (18, 402, 600) is further configured to:
access (302, 502) a second set of prognostic data (424, 636) associated with a second component (20, 36, 52, 214, 216, 222, 408, 410, 412, 404, 608, 610) of the engine (21, 200, 404, 606), wherein the second set of prognostic data (424, 636) associated with the second component (20, 36, 52, 214, 216, 222, 408, 410, 412, 404, 608, 610) includes a remaining lifespan approximation of the second component (20, 36, 52, 214, 216, 222, 408, 410, 412, 404, 608, 610) operating at the present operating condition;
alter (306, 512, 520) a maximum current limit constant (616, 618) associated with the second component (20, 36, 52, 214, 216, 222, 408, 410, 412, 404, 608, 610) to increase the remaining lifespan approximation of the second component (20, 36, 52, 214, 216, 222, 408, 410, 412, 404, 608, 610) beyond the temporal length; and
implement (308, 524) the maximum current limit constant (616, 618) associated with the second component (20, 36, 52, 214, 216, 222, 408, 410, 412, 404, 608, 610) so that the second component (20, 36, 52, 214, 216, 222, 408, 410, 412, 404, 608, 610) does not fault during engine operation.

7. A method (300, 500) of operating a turbine engine comprising:
identifying (304, 502) a first engine component (20, 36, 52, 214, 216, 222, 408, 410, 412, 404, 608, 610) that is predicted to fail during an active on-station procedure,
wherein identifying the first engine component (20, 36, 52, 214, 216, 222, 408, 410, 412, 404, 608, 610) occurs during the active on-station procedure;
adjusting (306, 512) a maximum current limit constant (616) during the active on-station procedure to provide (520) a new first engine component limit protection (618) to the first engine component (20, 36, 52, 214, 216, 222, 408, 410, 412, 404, 608, 610), wherein adjusting the maximum current limit constant (616) alters the active on-station procedure to an altered active on-station procedure; and
determining (522) that the first engine component (20, 36, 52, 214, 216, 222, 408, 410, 412, 404, 608, 610) working under the new first engine component limit protection (618) is predicted to successfully perform during the altered active on-station procedure;
**characterized in that** the adjusting (306, 512) further comprises adjusting a minimum current limit constant (616, 618) associated with the first component (20, 36, 52, 214, 216, 222, 408, 410, 412, 404, 608, 610) to increase the remaining lifespan approximation of the first component (20, 36, 52, 214, 216, 222, 408, 410, 412, 404, 608, 610) beyond a temporal length of the active on-station procedure.

8. The method (300, 500) according to claim 7, further comprising generating (406, 604) a set of prognostic data (424, 636) about the first component (20, 36, 52, 214, 216, 222, 408, 410, 412, 404, 608, 610).

9. The method (300, 500) according to claim 8, wherein the identifying (304, 502) the first engine component (20, 36, 52, 214, 216, 222, 408, 410, 412, 404, 608, 610) that is predicted to fail is based on generating the set of prognostic data (424, 636) about the first component (20, 36, 52, 214, 216, 222, 408, 410, 412, 404, 608, 610).

10. The method (300, 500) according to any one of claims 7 to 9 further comprising;
identifying (304, 504) a second engine component (20, 36, 52, 214, 216, 222, 408, 410, 412, 404, 608, 610) that is predicted to fail during the active on-station procedure, wherein identifying (304, 504) the second engine component (20, 36, 52, 214, 216, 222, 408, 410, 412, 404, 608, 610) occurs during the active on-station procedure;
adjusting (306, 512) a maximum current limit constant (616) during the active on-station procedure to provide (520) a new second engine component limit protection (618) to the second engine component (20, 36, 52, 214, 216, 222, 408, 410, 412, 404, 608, 610), wherein adjusting (306, 512) the maximum current limit constant (616) alters the altered active on-station procedure to a second altered active on-station procedure; and
determining (522) that the second engine component (20, 36, 52, 214, 216, 222, 408, 410, 412, 404, 608, 610) is predicted to successfully perform during the second altered active on-station procedure.

11. The method (300, 500) according to claim 10, further comprising generating a set of prognostic data (424, 636) associated with the second component (20, 36, 52, 214, 216, 222, 408, 410, 412, 404, 608, 610).

12. The method (300, 500) according to any one of claims 7 to 11, wherein the first engine component (20, 36, 52, 214, 216, 222, 408, 410, 412, 404, 608, 610) is a fuel pump metering unit.

13. The method (300, 500) according to any one of claims 7 to 12, wherein adjusting (306, 502) the maximum current limit constant (616) employs a least wins logic scheme.

14. The method (300, 500) according to any one of claims 7 to 13, further comprising providing (514) an operator an opportunity to override (624, 626) the new first engine component limit protection (618).

## Patentansprüche

1. Echtzeit-Motormanagementsystem (10), umfassend:
ein Steuerungssystem (18, 402, 600), das dazu ausgelegt ist, die Anforderung an eine erste Komponente (20, 36, 52, 214, 216, 222, 408, 410, 412, 404, 608, 610) eines Motors (12, 200, 404, 606) zu steuern, wobei das Steuerungssystem (18, 402, 600) dazu ausgelegt ist:
auf einen ersten Satz prognostischer Daten (424, 636) über die erste Komponente (20, 36, 52, 214, 216, 222, 408, 410, 412, 404, 608, 610) zuzugreifen (302, 502), wobei der erste Satz prognostischer Daten (424, 636) eine Restlebensdauerannäherung der ersten Komponente (20, 36, 52, 214, 216, 222, 408, 410, 412, 404, 608, 610) beinhaltet, die unter einem aktuellen Betriebszustand läuft;
eine zeitliche Länge eines Motorvorgangs (634) zu identifizieren (304, 504), der unter dem aktuellen Betriebszustand abläuft;
eine maximale Strombegrenzungskonstante (616, 618), die der ersten Komponente (20, 36, 52, 214, 216, 222, 408, 410, 412, 404, 608, 610) zugeordnet ist, zu ändern (306, 512, 520), um die Restlebensdauerannäherung der ersten Komponente (20, 36, 52, 214, 216, 222, 408, 410, 412, 404, 608, 610) über die zeitliche Länge hinaus zu erhöhen;
die maximale Strombegrenzungskonstante (616, 618), die der ersten Komponente (20, 36, 52, 214, 216, 222, 408, 410, 412, 404, 608, 610) zugeordnet ist, zu implementieren (308, 524), sodass die erste Komponente (20, 36, 52, 214, 216, 222, 408, 410, 412, 404, 608, 610) während des Motorbetriebs keinen Fehler aufweist; **dadurch gekennzeichnet, dass** das Steuerungssystem (18, 402, 600) ferner dazu ausgelegt ist, eine der ersten Komponente (20, 36, 52, 214, 216, 222, 408, 410, 412, 404, 608, 610) zugeordnete minimale Strombegrenzungskonstante (616, 618) zu ändern (520), um die Restlebensdauerannäherung der ersten Komponente (20, 36, 52, 214, 216, 222, 408, 410, 412, 404, 608, 610) über die zeitliche Länge hinaus zu erhöhen.

2. Echtzeit-Motormanagementsystem (10) nach Anspruch 1, wobei der Motor (12, 200, 404, 606) dazu ausgelegt ist, eine Antriebsleistung in einem Transportfahrzeug bereitzustellen.

3. Echtzeit-Motormanagementsystem (10) nach Anspruch 1 oder 2, wobei das Steuerungssystem (18, 402, 600) ferner dazu ausgelegt ist, den ersten Satz von prognostischen Daten zu erzeugen (406, 604).

4. Echtzeit-Motormanagementsystem (10) nach einem der Ansprüche 1 bis 3, wobei das Steuerungssystem (18, 402, 600) ferner dazu ausgelegt ist, einem Bediener die Möglichkeit zu bieten (514), die Implementierung der maximalen Strombegrenzungskonstante (616, 618), die der ersten Komponente (20, 36, 52, 214, 216, 222, 408, 410, 412, 404, 608, 610) zugeordnet ist, zu überschreiben (624).

5. Echtzeit-Motormanagementsystem (10) nach einem der vorhergehenden Ansprüche, wobei es sich bei der ersten Komponente (20, 36, 52, 214, 216, 222, 408, 410, 412, 404, 608, 610) um eine Kraftstoffpumpen-Dosiereinheit handelt.

6. Echtzeit-Motormanagementsystem (10) gemäß einem der vorhergehenden Ansprüche, wobei das Steuerungssystem (18, 402, 600) ferner dazu ausgelegt ist:
auf einen zweiten Satz prognostischer Daten (424, 636), der einer zweiten Komponente (20, 36, 52, 214, 216, 222, 408, 410, 412, 404, 608, 610) des Motors (21, 200, 404, 606) zugeordnet ist, zuzugreifen (302, 502), wobei der zweite Satz prognostischer Daten (424, 636), der der zweiten Komponente (20, 36, 52, 214, 216, 222, 408, 410, 412, 404, 608, 610) zugeordnet ist, eine Restlebensdauerannäherung der zweiten Komponente (20, 36, 52, 214, 216, 222, 408, 410, 412, 404, 608, 610) beinhaltet, die unter dem aktuellen Betriebszustand läuft;
eine maximale Strombegrenzungskonstante (616, 618), die der zweiten Komponente (20, 36, 52, 214, 216, 222, 408, 410, 412, 404, 608, 610) zugeordnet ist, zu ändern (306, 512, 520), um die Restlebensdauerannäherung der zweiten Komponente (20, 36, 52, 214, 216, 222, 408, 410, 412, 404, 608, 610) über die zeitliche Länge hinaus zu erhöhen; und
die maximale Strombegrenzungskonstante (616, 618), die der zweiten Komponente (20, 36, 52, 214, 216, 222, 408, 410, 412, 404, 608, 610) zugeordnet ist, zu implementieren (308, 524), sodass die zweite Komponente (20, 36, 52, 214, 216, 222, 408, 410, 412, 404, 608, 610) während des Motorbetriebs keinen Fehler aufweist.

7. Verfahren (300, 500) zum Betreiben eines Turbinenmotors, umfassend:
Identifizieren (304, 502) einer ersten Motorkomponente (20, 36, 52, 214, 216, 222, 408, 410, 412, 404, 608, 610), die während einer aktiven On-Station-Prozedur voraussichtlich ausfallen wird, wobei das Identifizieren der ersten Motorkomponente (20, 36, 52, 214, 216, 222, 408, 410, 412, 404, 608, 610) während der aktiven On-Station-Prozedur erfolgt;
Einstellen (306, 512) einer maximalen Strombegrenzungskonstante (616) während der aktiven On-Station-Prozedur, um einen neuen ersten Motorkomponenten-Begrenzungsschutz (618) für die erste Motorkomponente (20, 36, 52, 214, 216, 222, 408, 410, 412, 404, 608, 610) bereitzustellen (520), wobei das Einstellen der maximalen Strombegrenzungskonstante (616) die aktive On-Station-Prozedur in eine geänderte aktive On-Station-Prozedur ändert; und
Bestimmen (522), dass die erste Motorkomponente (20, 36, 52, 214, 216, 222, 408, 410, 412, 404, 608, 610), die unter dem neuen ersten Motorkomponenten-Begrenzungsschutz (618) läuft, voraussichtlich während der geänderten aktiven On-Station-Prozedur erfolgreich arbeitet;
**dadurch gekennzeichnet, dass** das Einstellen (306, 512) ferner das Einstellen einer minimalen Strombegrenzungskonstante (616, 618) umfasst, die der ersten Komponente (20, 36, 52, 214, 216, 222, 408, 410, 412, 404, 608, 608, 610) zugeordnet ist, um die Restlebensdauerannäherung der ersten Komponente (20, 36, 52, 214, 216, 222, 408, 410, 412, 404, 608, 610) über eine zeitliche Länge der aktiven On-Station-Prozedur hinaus zu erhöhen.

8. Verfahren (300, 500) nach Anspruch 7, ferner umfassend das Erzeugen (406, 604) eines Satzes von prognostischen Daten (424, 636) über die erste Komponente (20, 36, 52, 214, 216, 222, 408, 410, 412, 404, 608, 610).

9. Verfahren (300, 500) nach Anspruch 8, wobei das Identifizieren (304, 502) der ersten Motorkomponente (20, 36, 52, 214, 216, 222, 408, 410, 412, 404, 608, 610), die voraussichtlich ausfallen wird, auf dem Erzeugen des Satzes von prognostischen Daten (424, 636) über die erste Komponente (20, 36, 52, 214, 216, 222, 408, 410, 412, 404, 608, 610) beruht.

10. Verfahren (300, 500) nach einem der Ansprüche 7 bis 9, ferner umfassend:
Identifizieren (304, 504) einer zweiten Motorkomponente (20, 36, 52, 214, 216, 222, 408, 410, 412, 404, 608, 610), die während der aktiven On-Station-Prozedur voraussichtlich ausfallen wird, wobei das Identifizieren (304, 504) der zweiten Motorkomponente (20, 36, 52, 214, 216, 222, 408, 410, 412, 404, 608, 610) während der aktiven On-Station-Prozedur erfolgt;
Einstellen (306, 512) einer maximalen Strombegrenzungskonstante (616) während der aktiven On-Station-Prozedur, um einen neuen zweiten Motorkomponenten-Begrenzungsschutz (618) für die zweite Motorkomponente (20, 36, 52, 214, 216, 222, 408, 410, 412, 404, 608, 610) bereitzustellen (520), wobei das Einstellen der maximalen Strombegrenzungskonstante (616) die aktive On-Station-Prozedur in eine zweite geänderte aktive On-Station-Prozedur ändert; und
Bestimmen (522), dass die zweite Motorkomponente (20, 36, 52, 214, 216, 222, 408, 410, 412, 404, 608, 610) voraussichtlich während der zweiten geänderten aktiven On-Station-Prozedur erfolgreich arbeitet;

11. Verfahren (300, 500) nach Anspruch 10, ferner umfassend das Erzeugen eines Satzes von prognostischen Daten (424, 636), der der zweiten Komponente (20, 36, 52, 214, 216, 222, 408, 410, 412, 404, 608, 610) zugeordnet ist.

12. Verfahren (300, 500) nach einem der Ansprüche 7 bis 11, wobei es sich bei der ersten Motorkomponente (20, 36, 52, 214, 216, 222, 408, 410, 412, 404, 608, 610) um eine Kraftstoffpumpen-Dosiereinheit handelt.

13. Verfahren (300, 500) nach einem der Ansprüche 7 bis 12, wobei das Einstellen (306, 502) der maximalen Strombegrenzungskonstante (616) ein Logikschema mit geringsten Gewinnen anwendet.

14. Verfahren (300, 500) nach einem der Ansprüche 7 bis 13, ferner umfassend das Bereitstellen (514) einer Möglichkeit zum Überschreiben (624, 626) des neuen ersten Motorkomponenten-Begrenzungsschutzes (618) durch einen Bediener.

## Revendications

1. Système de gestion de moteur en temps réel (10) comprenant :
un système de contrôleur (18, 402, 600) configuré de manière à commander une demande sur un premier composant (20, 36, 52, 214, 216, 222, 408, 410, 412, 404, 608, 610) d'un moteur (12, 200, 404, 606), dans lequel le système de contrôleur (18, 402, 600) est configuré de manière à :
accéder (302, 502) à un premier ensemble de données de pronostic (424, 636) concernant le premier composant (20, 36, 52, 214, 216, 222, 408, 410, 412, 404, 608, 610), dans lequel le premier ensemble de données de pronostic (424, 636) inclut une approximation de durée de vie restante du premier composant (20, 36, 52, 214, 216, 222, 408, 410, 412, 404, 608, 610) fonctionnant dans une condition de fonctionnement en cours ;
identifier (304, 504) une durée temporelle d'une procédure de moteur (634) fonctionnant dans la condition de fonctionnement en cours ;
modifier (306, 512, 520) une constante de limite de courant maximum (616, 618) associée au premier composant (20, 36, 52, 214, 216, 222, 408, 410, 412, 404, 608, 610) en vue d'augmenter l'approximation de durée de vie restante du premier composant (20, 36, 52, 214, 216, 222, 408, 410, 412, 404, 608, 610) au-delà de la durée temporelle ;
mettre en œuvre (308, 524) la constante de limite de courant maximum (616, 618) associée au premier composant (20, 36, 52, 214, 216, 222, 408, 410, 412, 404, 608, 610), de sorte que le premier composant (20, 36, 52, 214, 216, 222, 408, 410, 412, 404, 608, 610) n'est pas défaillant au cours du fonctionnement de moteur ; **caractérisé en ce que** le système de contrôleur (18, 402, 600) est en outre configuré de manière à modifier (520) une constante de limite de courant minimum (616, 618) associée au premier composant (20, 36, 52, 214, 216, 222, 408, 410, 412, 404, 608, 610) en vue d'augmenter l'approximation de durée de vie restante du premier composant (20, 36, 52, 214, 216, 222, 408, 410, 412, 404, 608, 610) au-delà de la durée temporelle.

2. Système de gestion de moteur en temps réel (10) selon la revendication 1, dans lequel le moteur (12, 200, 404, 606) est configuré de manière à fournir une puissance de propulsion dans un véhicule de transport.

3. Système de gestion de moteur en temps réel (10) selon la revendication 1 ou 2, dans lequel le système de contrôleur (18, 402, 600) est en outre configuré de manière à générer (406, 604) le premier ensemble de données de pronostic.

4. Système de gestion de moteur en temps réel (10) selon l'une quelconque des revendications 1 à 3, dans lequel le système de contrôleur (18, 402, 600) est en outre configuré de manière à offrir (514), à un opérateur, la possibilité de passer outre (624) la mise en œuvre de la constante de limite de courant maximum (616, 618) associée au premier composant (20, 36, 52, 214, 216, 222, 408, 410, 412, 404, 608, 610).

5. Système de gestion de moteur en temps réel (10) selon l'une quelconque des revendications précédentes, dans lequel le premier composant (20, 36, 52, 214, 216, 222, 408, 410, 412, 404, 608, 610) est une unité de dosage de pompe à carburant.

6. Système de gestion de moteur en temps réel (10) selon l'une quelconque des revendications précédentes, dans lequel le système de contrôleur (18, 402, 600) est en outre configuré de manière à :
accéder (302, 502) à un second ensemble de données de pronostic (424, 636) associé à un second composant (20, 36, 52, 214, 216, 222, 408, 410, 412, 404, 608, 610) du moteur (21, 200, 404, 606), dans lequel le second ensemble de données de pronostic (424, 636) associé au second composant (20, 36, 52, 214, 216, 222, 408, 410, 412, 404, 608, 610) inclut une approximation de durée de vie restante du second composant (20, 36, 52, 214, 216, 222, 408, 410, 412, 404, 608, 610) fonctionnant dans la condition de fonctionnement en cours ;
modifier (306, 512, 520) une constante de limite de courant maximum (616, 618) associée au second composant (20, 36, 52, 214, 216, 222, 408, 410, 412, 404, 608, 610) en vue d'augmenter l'approximation de durée de vie restante du second composant (20, 36, 52, 214, 216, 222, 408, 410, 412, 404, 608, 610) au-delà de la durée temporelle ; et
mettre en œuvre (308, 524) la constante de limite de courant maximum (616, 618) associée au second composant (20, 36, 52, 214, 216, 222, 408, 410, 412, 404, 608, 610) de sorte que le second composant (20, 36, 52, 214, 216, 222, 408, 410, 412, 404, 608, 610) n'est pas défaillant pendant le fonctionnement de moteur.

7. Procédé (300, 500) de fonctionnement d'un moteur à turbine comprenant les étapes ci-dessous consistant à :
identifier (304, 502) un premier composant de moteur (20, 36, 52, 214, 216, 222, 408, 410, 412, 404, 608, 610) pour lequel une défaillance est prédite pendant une procédure sur station active, dans lequel l'identification du premier composant de moteur (20, 36, 52, 214, 216, 222, 408, 410, 412, 404, 608, 610) se produit pendant la procédure sur station active ;
ajuster (306, 512) une constante de limite de courant maximum (616) pendant la procédure sur station active en vue de fournir (520) une nouvelle protection de limite de premier composant de moteur (618) au premier composant de moteur (20, 36, 52, 214, 216, 222, 408, 410, 412, 404, 608, 610), dans lequel l'étape d'ajustement de la constante de limite de courant maximum (616) modifie la procédure sur station active en une procédure sur station active modifiée ; et
déterminer (522) que le premier composant de moteur (20, 36, 52, 214, 216, 222, 408, 410, 412, 404, 608, 610) fonctionnant sous la nouvelle protection de limite de premier composant de moteur (618) fonctionnera correctement, selon toute prédiction, pendant la procédure sur station active modifiée ; **caractérisé en ce que** l'étape d'ajustement (306, 512) consiste en outre à ajuster une constante de limite de courant minimum (616, 618) associée au premier composant (20, 36, 52, 214, 216, 222, 408, 410, 412, 404, 608, 610) en vue d'augmenter l'approximation de durée de vie restante du premier composant (20, 36, 52, 214, 216, 222, 408, 410, 412, 404, 608, 610) au-delà d'une durée temporelle de la procédure sur station active.

8. Procédé (300, 500) selon la revendication 7, comprenant en outre l'étape consistant à générer (406, 604) un ensemble de données de pronostic (424, 636) concernant le premier composant (20, 36, 52, 214, 216, 222, 408, 410, 412, 404, 608, 610).

9. Procédé (300, 500) selon la revendication 8, dans lequel l'étape d'identification (304, 502) du premier composant de moteur (20, 36, 52, 214, 216, 222, 408, 410, 412, 404, 608, 610) dont la défaillance est prédite est basée sur la génération de l'ensemble de données de pronostic (424, 636) concernant le premier composant (20, 36, 52, 214, 216, 222, 408, 410, 412, 404, 608, 610).

10. Procédé (300, 500) selon l'une quelconque des revendications 7 à 9, comprenant en outre les étapes ci-dessous consistant à :
identifier (304, 504) un second composant de moteur (20, 36, 52, 214, 216, 222, 408, 410, 412, 404, 608, 610) pour lequel une défaillance est prédite pendant la procédure sur station active, dans lequel l'identification (304, 504) du second composant de moteur (20, 36, 52, 214, 216, 222, 408, 410, 412, 404, 608, 610) se produit pendant la procédure sur station active ;
ajuster (306, 512) une constante de limite de courant maximum (616) pendant la procédure sur station active en vue de fournir (520) une nouvelle protection de limite de second composant de moteur (618) au second composant de moteur (20, 36, 52, 214, 216, 222, 408, 410, 412, 404, 608, 610), dans lequel l'étape d'ajustement (306, 512) de la constante de limite de courant maximum (616) modifie la procédure sur station active en une seconde procédure sur station active modifiée ; et
déterminer (522) que le second composant de moteur (20, 36, 52, 214, 216, 222, 408, 410, 412, 404, 608, 610) fonctionnera correctement, selon toute prédiction, pendant la seconde procédure sur station active modifiée.

11. Procédé (300, 500) selon la revendication 10, comprenant en outre l'étape consistant à générer un ensemble de données de pronostic (424, 636) associé au second composant (20, 36, 52, 214, 216, 222, 408, 410, 412, 404, 608, 610).

12. Procédé (300, 500) selon l'une quelconque des revendications 7 à 11, dans lequel le premier composant de moteur (20, 36, 52, 214, 216, 222, 408, 410, 412, 404, 608, 610) est une unité de dosage de pompe à carburant.

13. Procédé (300, 500) selon l'une quelconque des revendications 7 à 12, dans lequel l'étape d'ajustement (306, 502) de la constante de limite de courant maximum (616) utilise un schéma logique des moindres gains.

14. Procédé (300, 500) selon l'une quelconque des revendications 7 à 13, comprenant en outre l'étape consistant à fournir (514), à un opérateur, une possibilité de passer outre (624, 626) la nouvelle protection de limite de premier composant de moteur (618).
